# EUROPÄISCHE PATENTANMELDUNG

(11) **EP 1 595 914 A1**
(43) Veröffentlichungstag der Anmeldung: **16.11.2005**
(21) Anmeldenummer: 05009130.5
(22) Anmeldetag: 26.04.2005
(51) Int. Cl.: C08K 7/14

(54) **Kabelkomponenten aus Siliconelastomer mit Glasfasern**

(30) Priorität: 10.05.2004 DE 102004022992
(71) Anmelder: Wacker-Chemie GmbH, 81737 München (DE)
(72) Erfinder: Jerschow, Peter, Dr., 84489 Burghausen (DE)
(74) Vertreter: Fritz, Helmut

(57) **Zusammenfassung**

Gegenstand der Erfindung sind Kabelkomponenten (K) aus Siliconelastomer, das Glasfasern einer durchschnittlichen Länge von mindestens 1 m enthält.

## Beschreibung

Die Erfindung betrifft Kabelkomponenten (K) aus Siliconelastomer, das Glasfasern enthält und deren Herstellung.

In der US-A-6,387,518 ist gefüllter Siliconkautschuk für Sicherheitskabel beschrieben. Der Siliconkautschuk kann neben Metalloxid noch Glasfasern enthalten. Die Isolierung aus dem Siliconkautschuk verbrennt im Brandfall und bildet mit dem Metalloxid eine Keramik, die elektrisch isolierend ist, Dadurch wird ein Kurzschluss zwischen den Adern des Kabels verhindert und für einen Funktionserhalt des Kabels gesorgt.

Die Glasfasern sind als Füllstoffe vorhanden. Als Füllstoffe werden üblicherweise kurze Faserabschnitte im Bereich von unter 1 mm bis maximal mehrere cm eingesetzt. Derartige Füllstoffe wirken sich negativ auf die elektische Durchschlagsfestigkeit des Siliconkautschuks aus.

Bestimmte Standards fordern eine erhöhte Flexibilität des Kabels im Brandfall, wodurch die Keramik zerbröckelt und der Funktionserhalt nicht gewährleistet ist.

Zur mechanischen Verfestigung ist bekannt, Adern mit Micatapes zu umwickeln. Diese Methode ist extrem teuer und gegenüber einer einfachen Isolierung mit Siliconkautschuk nicht wettbewerbsfähig.

Gegenstand der Erfindung sind Kabelkomponenten (K) aus Siliconelastomer, das Glasfasern einer durchschnittlichen Länge von mindestens 1 m enthält.

Die Kabelkomponenten (K) weisen nicht nur verbesserte mechanische Eigenschaften des Siliconelastomers auf z.B. erhöhte Reissfestigkeit, sondern bilden im Brandfall durch Verbrennen des Siliconelastomers mit den Glasfasern eine mechanisch widerstandsfähige Keramik, die elektrisch isolierend ist. Insbesondere ist die Keramik weniger brüchig, da die Glasfasern einkeramisieren und die Keramik verfestigen, ähnlich wie dies durch Stahlarmierungen im Stahlbeton der Fall ist.

Bei der Extrusion der Kabelkomponenten (K) können die Glasfasern in den Siliconkautschuk miteingezogen werden. Dabei wird die Extrusionsgeschwindigkeit nicht verlangsamt.

Die Glasfasern können in beliebiger Anordnung im Siliconkautschuk vorliegen. Die Glasfasern sind vorzugsweise parallel oder spiralförmig zum Leiter angeordnet.

Die Glasfasern weisen vorzugsweise eine durchschnittliche Länge von mindestens 10 m auf, sie können auch mehrere km lang sein.

Kabelkomponenten (K) sind beispielsweise die Isolierhülle um den Leiter, Schutzhülle und Aussenmantel sowie Profile, die dem Brandschutz dienen, wie Bauprofile.

Das Siliconelastomer ist erhältlich durch Vernetzen von Siliconkautschuk. Dieser kann peroxidisch vernetzend, kondensationsvernetzend oder additionsvernetzend sein. Vorzugsweise ist der Siliconkautschuk eine peroxidisch vernetzende Siliconkautschukmasse, die vorzugsweise folgende Komponenten enthält:

Organopolysiloxane (A) aus Einheiten der allgemeinen Formel I

RᵣSiO_{(4-r)/2}

worin
- **R**: gleich oder verschieden sein kann und gegebenenfalls substituierter Kohlenwasserstoffrest bedeutet.
- **r**: 0, 1, 2 oder 3 ist und einen durchschnittlichen Zahlenwert von 1,9 bis 2,1 hat.

Beispiele für Kohlenwasserstoffreste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclohexylreste; Arylreste, .wie der Phenyl-, Biphenyl-, Naphtyl- und Anthryl-und Phenanthrylrest; Alkarylreste, wie o-, m-, p-Tolylreste, Xylylreste und Ethylphenylreste; Aralkylreste, wie der Benzylrest, der α- und der β-Phenylethylrest.

Beispiele für substituierte Kohlenwasserstoffreste **R** sind halogenierte Alkylreste, wie der 3-Chlorpropyl-, der 3,3,3-Trifluorpropyl- und der Perfluorhexylethylrest, halogenierte Arylreste, wie der p-Chlorphenyl- und der p-Chlorbenzylrest.

Weitere Beispiele für Reste **R** sind der Vinyl-, Allyl-, Methallyl-, 1-Propenyl-, 1-Butenyl-, 1-Pentenylrest, 5-Hexenyl-, Butadienyl-, Hexadienyl-, Cyclopentenyl-, Cyclopentadienyl-, Cyclohexenyl-, Ethinyl-, Propargyl- und 1-Propinylrest.

Bevorzugt handelt es sich bei Rest **R** um Wasserstoffatom und Kohlenwasserstoffreste mit 1 bis 8 Kohlenstoffatomen, besonders bevorzugt um den Methyl-, Phenyl- oder Vinylrest.

Vorzugsweise sind an mindestens 70 Mol%, insbesondere mindestens 90 Mol% der in dem Organopolysiloxan (A) enthaltenen Si-Atome Alkylreste, insbesondere Methylreste, gebunden. Enthalten die Organopolysiloxane neben Si-gebundenen Methyl- und/oder 3,3,3-Trifluorpropylresten noch Si-gebundene Vinyl- und/oder Phenylreste, so handelt es sich bei letzteren bevorzugt um Mengen von 0,001 - 30 Mol%.

Vorzugsweise bestehen die Organopolysiloxane (A) überwiegend, insbesondere zu mindestens 95 Mol% aus Diorganosiloxaneinheiten. Die Endgruppen der Organopolysiloxane können Trialkylsiloxygruppen, insbesondere der Trimethylsiloxyrest oder der Dimethylvinylsiloxyrest, sein; es können aber auch ein oder mehrere dieser Alkylgruppen durch Hydroxygruppen oder Alkoxygruppen, wie Methoxy- oder Ethoxyreste, ersetzt sein.

Bei den Organopolysiloxanen (A) kann es sich um Flüssigkeiten oder hochviskose Substanzen handeln. Vorzugsweise weisen die Organopolysiloxane (A) bei 25°C eine Viskosität von 10³ bis 10⁸ mm²/s auf.

Vorzugsweise werden als Vernetzter bei den Siliconkautschukmassen Peroxide, wie Dibenzoylperoxid, Bis-(2,4-dichlorbenzoyl)-peroxid, Dicumylperoxid und 2,5-Bis-(tert.-butylperoxy)-2,5-dimethylhexan sowie deren Gemische eingesetzt, wobei Bis-(2,4-dichlorbenzoyl)-peroxid und 2,5-Bis-(tert.-butylperoxy)-2,5-dimethylhexan bevorzugt sind.

Des weiteren wird als Vernetzer vorzugsweise ein Gemisch aus Bis - 4 - +Methylbenzoylperoxid - (= PMBP) und 2,5-Dimethyl-Hexan - 2,5 - di-tertiär-butylperoxid (=DHBP) im Verhältnis 1 : 0,4 bis 0,5 : 1, bevorzugt im Verhältnis 1:0,4 verwendet.

Des weiteren enthalten die Siliconkautschukmassen vorzugsweise verstärkende und/oder nichtverstärkende Füllstoffe.

Beispiele für verstärkende Füllstoffe sind pyrogene oder gefällte Kieselsäuren mit BET-Oberflächen von mindestens 50 m²/g.

Die genannten Kieselsäurefüllstoffe können hydrophilen Charakter haben oder nach bekannten Verfahren hydrophobiert sein. Hierzu sei beispielsweise auf US-A-5,057,151 verwiesen. Im allgemeinen erfolgt dann die Hydrophobierung mit 1 bis 20 Gew.-% Hexamethyldisilazan-und/oder Divinyltetramethyldisilazan und 0,5 bis 5 Gew.-% Wasser, jeweils bezogen auf das Gesamtgewicht der Organopolysiloxanmasse, wobei diese Reagenzien vorteilhafterweise in einer geeigneten Mischvorrichtung, wie z.B. Kneter oder Innenmischer, zum bereits vorgelegten Organopolysiloxan (A) gegeben werden, bevor die hydrophile Kieselsäure sukzessive in die Masse eingearbeitet wird.

Beispiele für nichtverstärkende Füllstoffe sind Quarzmehl, Diatomeenerde, Calciumsilikat, Zirkoniumsilicat, Zeolithe, Metalloxidpulver, wie Aluminium-, Titan-, Eisen- oder Zinkoxid, Bariumsilikat, Bariumsulfat, Calciumcarbonat, Gips sowie Kunststoffpulver, wie Polyacrylnitrilpulver oder Polytetrafluorethylenpulver. Die BET-Oberfläche dieser Füllstoffe liegt vorzugsweise unter 50 m²/g.

Die zu Siliconelastomeren vernetzbaren Siliconkautschukmassen enthalten vorzugsweise Füllstoff in Mengen von 1 bis 200 Gewichtsteilen, besonders bevorzugt 30 bis 100 Gewichtsteilen, jeweils bezogen auf 100 Gewichtsteile Organopolysiloxan (A).

Der jeweiligen Anwendung entsprechend können den zu Siliconelastomeren vulkanisierbaren Siliconkautschukmassen Additive, wie beispielsweise Verarbeitungshilfsmittel, wie etwa Weichmacher, keramisierende Metallverbindungen, Pigmente und Stabilisatoren, wie etwa Hitzestabilisatoren, zugesetzt werden.

Als keramisierende Metallverbindungen sind bevorzugt Metalloxide aus der Gruppe Magnesiumoxid, Aluminiumoxid, Zinnoxid, Calciumoxid, Titanoxid, Bariumoxid und Metallverbindungen dieser Gruppe, bei denen bei Erhitzung Oxide entstehen, Borsäure, Zinkborat sowie Platinkomplexe mit zumindest einer ungesättigten Gruppe.

Beispiele für Weichmacher, die als Additive eingesetzt werden können, sind mit Trimethylsilylgruppen oder Hydroxygruppen terminierte Polydimethylsiloxane mit einer Viskosität von maximal 1000 mm²/s bei 25°C oder auch Diphenylsilandiol.

Beispiele für Hitzestabilisatoren, die als Additive eingesetzt werden können, sind Übergangsmetallfettsäuresalze, wie Eisenoctoat, Übergangsmetallsilanolate, wie Eisensilanolat, sowie Cer(IV)-Verbindungen.

Darüber hinaus enthält der Siliconkautschuk vorzugsweise keine weiteren Stoffe.

Bei den jeweiligen zur Herstellung des Siliconkautschuks eingesetzten Komponenten kann es sich jeweils um eine einzelne Art einer solchen Komponente, wie auch um ein Gemisch aus mindestens zwei verschiedenen Arten einer solchen Komponente handeln.

Des weiteren können als Silikonkautschuk auch übliche kondensationsvernetzende Organopolysiloxane, wie in z.B EP-A-359251 beschrieben, die hiermit durch Bezugnahme eingeschlossen ist (incorperated by reference), verwendet werden oder auch bekannte additionsvernetzende Massen.

Der Silikonkautschuk kann Platinkomplexe enthalten, die zumindest eine ungesättigte Gruppe aufweisen, wie vorzugsweise Platin-Olefin-Komplexe, Platin-Aldehyd-Komplexe, Platin-Keton-Komplexe, Platin-Vinylsiloxan-Komplexe, Platin-1,3-Divinyl-1,1,3,3-tetramethyldisiloxankomplexe mit oder ohne Gehalt an nachweisbarem organischem Halogen, Platin-Norbornadienmethylacetonatkomplexe, Bis-(gammapicolin)-platindichlorid, Trimethylendipyridinplatindichlorid, Dicyclopentadienplatindichlorid, Dimethylsulfoxydethylenplatin-(II)-dichlorid, Umsetzungsprodukte von Platintetrachlorid mit Olefin und primärem Amin oder sekundärem Amin oder primärem und sekundärem Amin, Umsetzungsprodukt aus in 1-Octen gelöstem Platintetrachlorid mit sec.-Butylamin, wobei der Platin - 1,3-Divinyl-1,1,3,3-tetrametyhldisiloxankomplex besonders bevorzugt ist. Dieser Platinkomplex wird in Mengen von 5 bis 200 ppm, bevorzugt 10 bis 100 ppm zugesetzt, wobei die Menge auf reines Platin bezogen ist. Es können auch Mischungen der Platinkomplexe verwendet werden.

Ein weiterer Gegenstand der Erfindung ist ein Verfahren zur Herstellung von Kabelkomponenten (K), bei dem Glasfasern einer durchschnittlichen Länge von mindestens 1 m gemeinsam mit Siliconkautschuk extrudiert werden.

Dabei ordnen sich die Glasfasern bevorzugt in Extrusionsrichtung an.
Die Extrusionsgeschwindigkeit muss durch das Einziehen der Glasfasern nicht verlangsamt werden.

## Patentansprüche

1. Kabelkomponenten (K) aus Siliconelastomer, das Glasfasern einer durchschnittlichen Länge von mindestens 1 m enthält.

2. Kabelkomponenten (K) nach Anspruch 1, wobei die Glasfasern parallel oder spiralförmig zum Leiter angeordnet sind.

3. Kabelkomponenten (K) nach Anspruch 1 und 2, die ausgewählt werden aus Isolierhülle um den Leiter, Schutzhülle, Aussenmantel und Profilen, die dem Brandschutz dienen.

4. Kabelkomponenten (K) nach Anspruch 1 bis 3, wobei das Siliconelastomer erhältlich ist durch Vernetzen von Siliconkautschuk, der peroxidisch vernetzend, kondensationsvernetzend oder additionsvernetzend ist.

5. Verfahren zur Herstellung von Kabelkomponenten (K), bei dem Glasfasern einer durchschnittlichen Länge von mindestens 1 m gemeinsam mit Siliconkautschuk extrudiert werden.
